# EUROPEAN PATENT APPLICATION

(11) **EP 4 421 139 A1**
(43) Date of publication of application: **28.08.2024**
(21) Application number: 22883606.0
(22) Date of filing: 19.10.2022
(51) Int. Cl.: C09J 111/02, C09J 7/35, C09J 11/08, C09J 123/28, C09J 133/04

(54) **ADHESIVE COMPOSITION**

(30) Priority: 21.10.2021 JP 2021172525
(71) Applicant: Resonac Corporation, Tokyo 105-7325 (JP)
(72) Inventor: OGAWA Masahiro, Tokyo 105-8518 (JP); MAKIO Ryo, Tokyo 105-8518 (JP); OGAWA Noriko, Tokyo 105-8518 (JP); SHIBUYA Akira, Tokyo 105-8518 (JP)
(74) Representative: Strehl Schübel-Hopf & Partner
(86) International application number: PCT/JP2022/038953
(87) International publication number: WO 2023/068302

(57) **Abstract**

[Objective] An objective of the present invention is to develop a chloroprene polymer latex adhesive composition that is excellent in terms of adhesiveness to soft polyvinyl chloride resins and also excellent in terms of thermal creep resistance with adherends.

[Solution] A method for producing an adhesive composition, including mixing
a chloroprene polymer latex (A) containing a chloroprene polymer in which a content rate of a gel component is 15% to 95%,
a (meth)acrylic polymer emulsion (B) containing a (meth)acrylic polymer having a monomer component represented by formula (1) in which Tg of the (meth)acrylic polymer is - 30°C or higher and 20°C or lower, and
a chlorinated polyolefin resin (C)
such that a mass ratio (a:b) between a solid content (a) of the chloroprene polymer in the chloroprene polymer latex (A) and a solid content (b) of the polymer in the (meth)acrylic polymer emulsion (B) reaches 90:10 to 65:35. 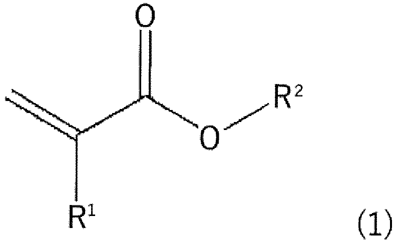 (In the general formula (1), R¹ is a hydrogen atom or a methyl group, and R² represents a linear or branched alkyl group having 1 to 18 carbon atoms.)

## Description

### Technical Field

The present invention relates to a method for producing an adhesive composition in which a chloroprene polymer latex is used, adhesive composition, an adhesive layer, and a laminate.

### Background Art

As polymers for adhesives, vinyl acetate-based polymers, chloroprene-based polymers, (meth)acrylic acid ester-based polymers, natural rubber, urethane-based polymers and the like are often used. Among those, homopolymers of chloroprene or copolymers of chloroprene and a different monomer (hereinafter, also referred to as "chloroprene polymers" in some cases) enable a high adhesive force to be obtained with low crimping with respect to a variety of kinds of adherends and are thus suitably used in an adhesive use as organic solvent-based contact adhesives.

In order to comply with volatile organic compound (VOC) regulations or organic solvent regulations from the viewpoint of consideration for the recent environmental pollution or human health, development of water-based adhesives in which no organic solvents are used is underway, and water-based adhesives containing a chloroprene polymer latex have been proposed.

Chloroprene polymer latex is in use as a variety of adhesives for architecture, furniture, home appliances, shoes and the like. Particularly, latex of chloroprene and α,β-unsaturated carboxylic acid is excellent in terms of adhesive strength and heat resistance and are thus used as a water-based adhesive of a chloroprene-based polymer. In addition, chloroprene polymer latex produced using a polyvinyl alcohol (PVA) as an emulsifier is excellent in terms of blending stability, pressure-sensitive adhesiveness or adhesiveness and is thus often used as a water-based adhesive.

However, chloroprene polymer latex has a different polarity from soft polyvinyl chloride resins and thus has poor compatibility, and furthermore, a plasticizer that is contained in soft polyvinyl chloride resins transfers to adhesives to cause deterioration of adhesive physical properties, which makes it extremely difficult to develop a sufficient adhesive strength with respect to soft polyvinyl chloride resins. Soft polyvinyl chloride resins are inexpensive and capable of improving excellent designability and are thus in wide use for automotive interior, architecture interior or the like. When this soft polyvinyl chloride resin is not capable of adhering, since limitations are caused on manufacturing steps of products, problems have been solved by reforming surfaces by the use of an appropriate primer or an oxidation treatment or a chemical treatment and then making the soft polyvinyl chloride resin adhere.

As a method for improving the adhesion performance of chloroprene polymer latex adhesives to soft polyvinyl chloride resins, it is disclosed that, for example, a water-based adhesive containing a chloroprene latex obtained by copolymerizing a monomer that can be copolymerized with polyvinyl alcohol, such as methacrylic acid, in the presence of polyvinyl alcohol and a carboxyl group-containing vinyl monomer, a water-based polyurethane resin and a tackifying resin as essential components improves adhesiveness to vinyl chloride (Patent Literature 1).

In addition, as solvent-based adhesives of a chloroprene-based polymer, an adhesive containing a polymer obtained by graft-copolymerizing a (meth)acrylic acid ester and acrylonitrile with chloroprene-based rubber in a solution as a main component (Patent Literature 2), a pressure-sensitive adhesive composition containing a graft copolymer obtained by graft-copolymerizing alkyl (meth)acrylate and vinyl acetate with chloroprene-based rubber (Patent Literature 3), or an adhesive composition obtained by graft-polymerizing an acrylic monomer with a polymer of chloroprene rubber and a chlorinated polyolefin and further adding a silane coupling agent thereto (Patent Literature 4) is disclosed. In addition, polychloroprene rubber for which a (meth)acrylic acid ester is grafted as a primer for a polychloroprene rubber latex adhesive and an adhesion method in which the polychloroprene rubber is used are disclosed (Patent Literature 5).

### Citation List

### Patent Literature

Patent Literature 1: JP2001-3021A
Patent Literature 2: JPH5-86347A
Patent Literature 3: JPH8-209093A
Patent Literature 4: JP2018-168227A
Patent Literature 5: JPH11-293215A

### Summary of Invention

### Technical Problem

However, recently, there has been a demand for a water-based adhesive on which a surface treatment is not performed from the viewpoint of reducing the cost taken for surface treatment. Furthermore, in a case where the temperature in a car in the summer increases up to 80°C as in an automotive interior material, when the heat resistance of an adhesive lacks, creep such as lifting or peeling occurs. For adhesives in fields where such thermal creep resistance is required, there is large room for improvement, and adhesives that sufficiently satisfy required characteristics have not yet been developed. In addition, recently, there has been a demand for higher heat resistance depending on the use. Therefore, studies are underway regarding improvement in the adhesiveness of chloroprene polymer latex to soft polyvinyl chloride resins in order to meet these desired.

An objective of the present invention is to develop an adhesive composition that is excellent in terms of adhesiveness to soft polyvinyl chloride resins and also excellent in terms of thermal creep resistance with adherends.

### Solution to Problem

As a result of a variety of studies for achieving the above-described objective, the present inventors found that the above-described objective is achieved by fabricating an adhesive composition by blending a chloroprene polymer latex (A) and a (meth)acrylic polymer emulsion (B) in a specific ratio and adding a chlorinated polyolefin resin (C) thereto.

That is, the present invention has the following configurations.
[1] A method for producing an adhesive composition, comprising mixing
   a chloroprene polymer latex (A) containing a chloroprene polymer in which a content rate of a gel component is 15% to 95%,
   a (meth)acrylic polymer emulsion (B) containing a (meth)acrylic polymer having a monomer component represented by formula (1) in which Tg of the (meth)acrylic polymer is - 30°C or higher and 20°C or lower, and
   a chlorinated polyolefin resin (C)
   such that a mass ratio (a:b) between a solid content (a) of the chloroprene polymer in the chloroprene polymer latex (A) and a solid content (b) of the polymer in the (meth)acrylic polymer emulsion (B) reaches 90:10 to 65:35. 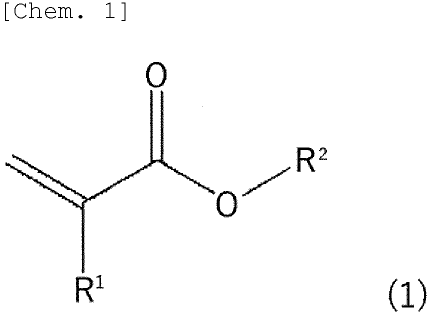 (In the general formula (1), R¹ is a hydrogen atom or a methyl group, and R² represents a linear or branched alkyl group having 1 to 18 carbon atoms.)
[2] The method for producing an adhesive composition according to [1], wherein the chlorinated polyolefin resin (C) is more than 0 parts by mass and 50 parts by mass or less with respect to a total of 100 parts by mass of the solid contents of the chloroprene polymer latex (A) and the (meth)acrylic polymer emulsion (B).
[3] The method for producing an adhesive composition according to [1] or [2], wherein, when a solid content of the adhesive composition is set to 100 mass%, a total amount of the solid contents of the chloroprene polymer latex (A) and the (meth)acrylic polymer emulsion (B) is 20 to 98 mass%.
[4] The method for producing an adhesive composition according to any one of [1] to [3], wherein a tackifier (D) is further blended.
[5] The method for producing an adhesive composition according to [4], wherein an amount of the tackifier (D) blended is more than 0 parts by mass and less than 50 parts by mass with respect to 100 parts by mass of a total amount of the solid contents of the chloroprene polymer latex (A) and the (meth)acrylic polymer emulsion (B).
[6] The method for producing an adhesive composition according to any one of [1] to [5], wherein the tackifier (D) contains at least one of a rosin-based resin, a terpene phenolic resin, and an alicyclic petroleum resin.
[7] The method for producing an adhesive composition according to any one of [1] to [6], wherein the chloroprene polymer in the chloroprene polymer latex (A) is a chloroprene homopolymer or a copolymer of chloroprene and 2,3-dichloro-1,3-butadiene.
[8] An adhesive composition comprising: a chloroprene polymer (A1); a (meth)acrylic polymer (B1) having a constituent unit derived from a monomer component represented by formula (1); a chlorinated polyolefin resin (C); and an aqueous medium, wherein a mass ratio (A1:B1) between the chloroprene polymer (A1) and the (meth)acrylic polymer (B1) in the adhesive composition is 90:10 to 65:35,
   a content rate of a gel component in the chloroprene polymer (A1) is 15% to 95%, and Tg of the (meth)acrylic polymer (B1) is -30°C or higher and 20°C or lower. 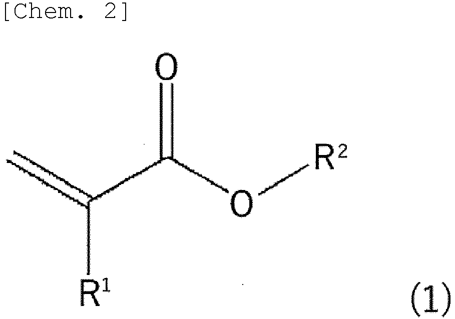 (In the general formula (1), R¹ is a hydrogen atom or a methyl group, and R² represents a linear or branched alkyl group having 1 to 18 carbon atoms.)
[9] The adhesive composition according to [8], wherein the chlorinated polyolefin resin (C) is more than 0 parts by mass and 50 parts by mass or less with respect to a total of 100 parts by mass of the chloroprene polymer (A1) and the (meth)acrylic polymer (B1).
[10] The adhesive composition according to [8] or [9], wherein, when a solid content of the adhesive composition is set to 100 mass%, a total amount of the solid contents of the chloroprene polymer (A1) and the (meth)acrylic polymer (B1) is 20 to 98 mass%.
[11] The adhesive composition according to any one of [8] to [10], further comprising: a tackifier (D).
[12] The adhesive composition according to [11], wherein an amount of the tackifier (D) blended is more than 0 parts by mass and less than 50 parts by mass with respect to 100 parts by mass of a total amount of the chloroprene polymer (A1) and the (meth)acrylic polymer (B1).
[13] The adhesive composition according to any one of [8] to [12], wherein the tackifier (D) contains at least one of a rosin-based resin, a terpene phenolic resin, and an alicyclic petroleum resin.
[14] An adhesive layer comprising: the adhesive composition according to any one of [8] to [13].
[15] A laminate formed by laminating two adherends through the adhesive composition according to any one of [8] to [13], wherein at least one of the adherends is a soft polyvinyl chloride resin.

### Advantageous Effect of Invention

According to the present invention, it is possible to provide an adhesive composition having a strong adhesive force to soft polyvinyl chloride resins and having excellent thermal creep resistance. Such an adhesive composition of the present invention is suitable as an adhesive in a case where at least one adherend is a soft polyvinyl chloride resin.

### Description of Embodiment

Hereinafter, the present invention will be specifically described.

A method for producing a chloroprene polymer latex-containing adhesive composition (hereinafter, simply referred to as the adhesive composition) of the present invention comprises mixing
a chloroprene polymer latex (A) containing a chloroprene polymer in which the content rate of the gel component is 150 to 95%,
a (meth)acrylic polymer emulsion (B) containing a (meth)acrylic polymer having a monomer component represented by formula (1) in which Tg of the (meth)acrylic polymer is - 30°C or higher and 20°C or lower, and
a chlorinated polyolefin resin (C)
such that the mass ratio (a:b) between a solid content (a) of the chloroprene polymer in the chloroprene polymer latex (A) and a solid content (b) of the polymer in the (meth)acrylic polymer emulsion (B) reaches 90:10 to 65:35.

### Chloroprene Polymer Latex (A)

The chloroprene polymer latex (A) contains the particles of a chloroprene polymer dispersed in water.

The chloroprene polymer in the chloroprene polymer latex (A) is a homopolymer of 2-chloro-1,3-butadiene (hereinafter, also referred to as "chloroprene") or a copolymer containing chloroprene as at least a monomer component.

### Chloroprene Polymer

The chloroprene polymer that configures the chloroprene polymer latex (A) of the present invention is a homopolymer of chloroprene or a copolymer of chloroprene. In the case of the copolymer, the chloroprene polymer may be any of a copolymer of chloroprene and 2,3-dichloro-1,3-butadiene, a copolymer of chloroprene and a different copolymerizable monomer or a copolymer of chloroprene, 2,3-dichloro-1,3-butadiene and a different copolymerizable monomer. In addition, regarding a unit that is derived from the different copolymerizable monomer, two or more kinds of units may be copolymerized as necessary, but the chloroprene polymer is preferably a polymer containing more than 50 mol% of chloroprene as a monomer component.

The chloroprene polymer is preferably a homopolymer of chloroprene or a copolymer of at least chloroprene and 2,3-dichloro-1,3-butadiene as monomer components and more preferably a copolymer of chloroprene and 2,3-dichloro-1,3-butadiene.

The different copolymerizable monomer that may be contained in the copolymer is not particularly limited as long as the monomer can be copolymerized with at least one of the chloroprene and 2,3-dichloro-1,3-butadiene, and examples thereof include 1-chloro-1,3-butadiene, butadiene, isoprene, styrene, acrylonitrile, acrylic acid esters thereof, methacrylic acid and esters thereof and the like.

In the chloroprene polymer that configures the chloroprene polymer latex (A) of the present invention, when the sum of chloroprene, 2,3-dichloro-1,3-butadiene and the different copolymerizable monomer is regarded as 100 parts by mass, the content of a unit that is derived from the chloroprene is preferably 80 to 100 parts by mass, more preferably 85 to 100 parts by mass, and still more preferably 88 to 100 parts by mass, the content of a unit that is derived from 2,3-dichloro-1,3-butadiene is preferably 0 to 20 parts by mass, more preferably 0 to 15 parts by mass, and still more preferably 0 to 12 parts by mass, and the content of the different copolymerizable monomer is preferably 0 to 5 parts by mass.

The latex that is composed of a chloroprene polymer in which the amount of the unit that is derived from 2,3-dichloro-1,3-butadiene is 0 to 20 parts by mass makes the adhesive force of an adhesive layer high, which is preferable.

The average particle diameter of the chloroprene polymer is within a range of preferably 50 to 500 nm, more preferably 70 to 300 nm, and still more preferably 90 to 210 nm.

The latex in which the average particle diameter of the chloroprene polymer is 50 to 500 nm makes the adhesive force of an adhesive layer high, which is preferable. The average particle diameter is normally maintained even in the adhesive composition.

The content rate of a gel component in the chloroprene polymer is within a range of 15 to 95 mass%, preferably 20 to 80 mass%, and more preferably 30 to 70 mass%.

The use of a latex containing a chloroprene polymer in which the content rate of the gel component is 15 to 95 mass% makes it possible to obtain an adhesive composition having excellent thermal creep resistance and high adhesiveness.

The chloroprene polymer latex (A) of the present invention preferably contains a rosin acid metal salt. The kind of the rosin acid metal salt is not particularly limited, examples thereof include gum rosin, wood rosin, tall rosin, disproportionated rosin obtained by a disproportionation reaction thereof, purified rosin and the like, and disproportionated rosin is preferable. As the metal salt, an alkali metal salt is normally used, and a sodium salt and/or a potassium salt is preferable. In the present invention, the rosin acid metal salt may be produced by separately adding a rosin acid and an alkali metal hydroxide.

The content of the rosin acid metal salt in the chloroprene polymer latex (A) is preferably 0.5 to 8 parts by mass, more preferably 1.0 to 6.5 parts by mass, and still more preferably 1.5 to 5.0 parts by mass with respect to 100 parts by mass of the chloroprene polymer. The rosin acid metal salt is normally used on the occasion of the emulsion polymerization of the chloroprene polymer latex (A), but may be blended into the chloroprene polymer latex (A).

In the case of using the rosin acid metal salt on the occasion of emulsion polymerization, the amount used with respect to prepared monomers becomes the content with respect to the chloroprene polymer as it is.

In addition, when the content of the rosin acid metal salt is within the above-described range, the stability of the latex can be enhanced, and, in the case of using the rosin acid metal salt on the occasion of, for example, emulsion polymerization, the number of micelles that are formed on the occasion of the emulsion polymerization is appropriate, and it becomes possible to make the viscosity after the polymerization be within a predetermined range. In addition, the emulsion polymerization is highly stably performed, the generation of heat in the initial phase of the polymerization is suppressed, and it becomes easy to prepare a chloroprene polymer that satisfies the above-described predetermined conditions.

A method for obtaining the chloroprene polymer latex (A) is not limited, and, in one embodiment, as monomers, chloroprene alone or chloroprene and 2,3-dichloro-1,3-butadiene plus the different copolymerizable monomer as necessary may be emulsion-polymerized using an polymerization initiator and a chain transfer agent preferably in the presence of the rosin acid metal salt, and a polymerization inhibitor may be added thereto when a predetermined polymerization conversion rate is reached to stop the polymerization.

The solid content concentration of the chloroprene polymer latex (A) is preferably 35 mass% or more and 65 mass% or less, more preferably 40 mass% or more and 65 mass% or less and still more preferably 45 mass% or more and 60 mass% or less. When the solid content concentration is within the above-described range, it is possible to shorten the drying time of the chloroprene polymer latex (A) and reduce the load on a dryer. In addition, when the solid content concentration is within the above-described range, it is easier to maintain the stability of the colloid of the chloroprene polymer latex (A), and it is possible to minimize the possibility of the generation of an aggregate. The dispersion medium is normally water.

The solid content in the present invention is a component obtained by removing a component that volatilizes under solid content measurement conditions, such as a solvent or a volatile component, from the latex or the emulsion, and the solid content of the chloroprene polymer latex (A) includes not only the chloroprene polymer but also the rosin acid metal salt or the like used during the production.

### (Meth)acrylic Polymer Emulsion (B)

The (meth)acrylic polymer emulsion (B) is an emulsion containing a (meth)acrylic polymer having a constituent unit that is derived from a monomer component represented by formula (1) and water. The (meth)acrylic polymer has become a polymer by the continuous addition reaction of an unsaturated double bond of the monomer component. 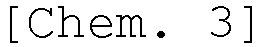 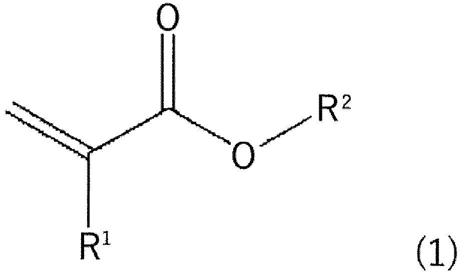 R¹ in the general formula (1) is a hydrogen atom or a methyl group and preferably a hydrogen atom.

R² in the general formula (1) is a linear or branched alkyl group, and the number of carbon atoms is more than 1, preferably more than 2, and more preferably more than 4. In addition, the number of carbon atoms is 18 or less, preferably 12 or less, and more preferably 8 or less. Specific examples of R² include a methyl group, an ethyl group, a propyl group, an isopropyl group, a butyl group, an isobutyl group, a sec-butyl group, a t-butyl group, a pentyl group, a neopentyl group, an isoamyl group, a hexyl group, a heptyl group, an octyl group, a 2-ethylhexyl group, an isooctyl group, a nonyl group, an isononyl group, a decyl group, an isodecyl group, an undecyl group, a dodecyl group, a tridecyl group, a tetradecyl group, a pentadecyl group, a hexadecyl group, a heptadecyl group, an octadecyl group and the like. Among these, an ethyl group is preferable from the viewpoint of the adhesiveness of the adhesive composition.

The monomer component represented by the formula (1) is contained in an amount of 60 mass% or more, preferably 70 mass% or more and more preferably 80 mass% or more in all monomers that form the (meth)acrylic polymer.

In addition, the (meth)acrylic polymer emulsion (B) preferably contains a polymer composed of two or more monomer components.

Furthermore, the (meth)acrylic polymer emulsion (B) may contain, aside from these components, a different component, the different component is not particularly limited, and, for example, a reactive functional group-containing unsaturated monomer, an unsaturated monomer that can be copolymerized with the monomer component represented by the formula (1) or the like may be contained as appropriate.

Specific examples of the monomer component represented by the general formula (1) include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate and the like, and ethyl (meth)acrylate is preferable. These monomer components represented by the general formula (1) may be used singly or two or more thereof may be jointly used.

Examples of the reactive functional group-containing unsaturated monomer include monomers having a polymerizable functional group having at least one unsaturated double bond, such as a (meth)acryloyl group or a vinyl group, and having another reactive functional group. In addition, monomers having a group having an unsaturated double bond in a reactive functional group, such as a maleimide group or an itaconimide group, can also be used, and monomers having a silicon-containing group, such as an alkoxysilyl group can also be used.

The reactive functional group means, for example, a functional group capable of forming at least one of a covalent bond or a coordinate bond by a reaction between reactive functional groups, such as an isocyanate group, or a reaction with a cross-linking component, such as a metal oxide that is contained as necessary, and this causes cross-linking. This cross-linking is caused as necessary to control the adhesiveness and the heat resistance when an adhesive is produced.

Specific examples of the reactive functional group include a carboxy group, a hydroxyl group, an epoxy group, an amino group, an amide group, a maleimide group, an itaconimide group, a succinimide group, a sulfonic acid group, a phosphoric acid group, an isocyanato group, an alkoxy group and the like. Such reactive functional groups may be contained alone or two or more thereof may be contained. Among the reactive functional groups, a carboxy group, a hydroxyl group, an amino group, and an epoxy group are preferable, an epoxy group and at least one selected from a carboxy group, a hydroxyl group, and an amino group are more preferably contained, and a carboxy group is still more preferable.

Specific examples of the reactive functional group-containing unsaturated monomer include unsaturated carboxylic acids such as itaconic acid, maleic acid, fumaric acid, crotonic acid, and cinnamic acid; unsaturated dicarboxylic acid monoesters such as monomethyl itaconate, monobutyl itaconate, and 2-acryloyloxyethyl phthalate; unsaturated tricarboxylic acid monoesters such as 2-methacryloyloxyethyltrimellitate and 2-methacryloyloxyethylpyromellitate; carboxyalkyl acrylates such as carboxyethyl acrylate (β-carboxyethyl acrylate and the like), and carboxypentyl acrylate; acrylic acid dimers (trade name "ARONIX (registered trademark) M-5600", manufactured by Toagosei Co., Ltd.), acrylic acid trimers; carboxy group-containing unsaturated monomers such as unsaturated dicarboxylic anhydrides such as itaconic anhydride, maleic anhydride, and fumaric anhydride; hydroxyl group-containing unsaturated monomers such as 2-hydroxyethyl acrylate, 2-hydroxypropyl acrylate, and 2-hydroxybutyl acrylate; epoxy group-containing unsaturated monomers such as glycidyl (meth)acrylate and methylglycidyl (meth)acrylate; amino group-containing unsaturated monomers such as aminoethyl (meth)acrylate, N,N-dimethylaminoethyl (meth)acrylate, and t-butylaminoethyl (meth)acrylate; amide group-containing unsaturated monomers such as (meth)acrylamide, N,N-dimethyl(meth)acrylamide, N,N-diethyl(meth)acrylamide, N-isopropyl(meth)acrylamide, N-butyl(meth)acrylamide, N-methoxymethyl(meth)acrylamide, N-methylol(meth)acrylamide, and N-methylolpropane(meth)acrylamide; cyano group-containing unsaturated monomers such as (meth)acrylonitrile; maleimide group-containing monomers such as N-cyclohexylmaleimide, N-isopropylmaleimide, N-laurylmaleimide, and N-phenylmaleimide; itaconimide group-containing monomers such as N-methylitaconimide, N-ethylitaconimide, N-butylitaconimide, N-octylitaconimide, N-2-ethylhexylitaconimide, N-cyclohexylitaconimide, and N-laurylitaconimide; succinimide group-containing monomers such as N-(meth)acryloyloxymethylene succinimide, N-(meth)acryloyl-6-oxyhexamethylene succinimide, and N-(meth)acryloyl-8-oxyoctamethylene succinimide; vinyl group-containing heterocyclic compounds such as N-vinylpyrrolidone, N-(1-methylvinyl)pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, and (meth)acryloylmorpholine; sulfonic acid group-containing unsaturated monomers such as styrene sulfonic aced, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphoric acid group-containing unsaturated monomers such as 2-hydroxyethyl acryloyl phosphate; functional monomers such as 2-methacryloyloxyethyl isocyanate; and the like. These may be used alone or two or more thereof may be jointly used.

The glass transition temperature (Tg) of the (meth)acrylic polymer in the (meth)acrylic polymer emulsion (B) is -30°C or higher and 20°C or lower, preferably -20°C or higher and 20°C or lower, more preferably -15°C or higher and 10°C or lower, and still more preferably -11°C or higher and 5°C or lower. When the glass transition temperature is -30°C or higher and 20°C or lower, since the (meth)acrylic polymer is considered to have a large number of cross-link points, the adhesive force is high, the adhesive strength is also high, the heat resistance is favorable, and it is thus possible to obtain an adhesive composition that is also excellent in terms of thermal creep resistance.

The (meth)acrylic polymer disperses in water to configure the emulsion. In addition, in the emulsion, a surfactant may be selected and used as appropriate for emulsification. Surfactants are generally roughly classified into anionic surfactants, cationic surfactants, nonionic surfactants, and amphoteric surfactants based on ionic properties thereof. As the nonionic surfactants, not only ethylene oxide surfactants having a polyoxyethylene chain, but also polyoxyalkylene derivatives, reactive surfactants, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene-hydrogenated castor oil, polyoxyethylene alkylamine, and alkyl alkanolamide are well known. Among ethylene oxide surfactants, polyoxyethylene alkyl aryl ethers are widely used in a variety of emulsions. As typical polyoxyethylene alkyl aryl ethers, there is polyoxyethylene nonyl phenyl ether (hereinafter, referred to as the nonylphenyl surfactant). The nonylphenyl surfactant has an effect of being excellent in terms of emulsion stability or dispersion stability.

A method for obtaining the (meth)acrylic polymer emulsion (B) is not limited, and the emulsion is obtained by emulsion-polymerizing a mixture of the monomers in the presence of the surfactant.

The amount of the surfactant that is used at the time of the emulsion polymerization is not particularly limited as long as the monomers can be emulsified, but is preferably 0.5 to 10 parts by mass and more preferably 1 to 6 parts by mass with respect to 100 parts by mass of the total amount of the monomers. As a radical polymerization initiator in the emulsion polymerization, any polymerization initiator can be used as long as the initiator can be used in normal emulsion polymerization, and examples thereof include water-soluble polymerization initiators such as persulfates such as potassium persulfate, ammonium persulfate, and sodium persulfate, and hydrochlorides such as hydrogen peroxide, t-butyl hydroperoxide, and azobisminodipropane, oil-soluble polymerization initiators such as benzoyl peroxide, cumene hydroperoxide, dibutyl peroxide, diisopropyl peroxide, cumyl peroxy neodecanoate, cumyl peroxy octoate, and azobisisobutinitrile and the like. Furthermore, as such a radical polymerization initiator, a redox-type polymerization initiator into which a reducing agent, such as acidic sodium sulfite or ascorbic acid has been combined can also be used. However, Rongalite dissipates formaldehyde and is thus desirably not used from the viewpoint of environmental consideration. The amount of the radical polymerization initiator used is not particularly limited, but is preferably 0.05 to 3 parts by mass and more preferably 0.1 to 1 part by mass with respect to 100 parts by mass of all of the monomers that are used.

A polymerization method may be normal emulsion polymerization, and a batch-type method in which all monomers are collectively charged into a reaction can, a dropwise addition-type method in which monomers are added dropwise at any time during the reaction, the dropwise addition-type method in which monomers, water and an emulsifier have been emulsified in advance and are added dropwise as a monomer emulsion or the like can be appropriately used. It is possible to use additives as desired such as a chain transfer agent that is used to adjust the degree of polymerization, a film formation assistant that adjusts the minimum film formation temperature, a plasticizer that improves the flexibility of a coating film, a thickener, an anti-foaming agent, a preservative, a rust inhibitor, an anti-freeze agent, and a formaldehyde catcher agent.

In the present invention, the (meth)acrylic polymer emulsion (B) can be obtained by fabricating a monomer emulsion in advance by the emulsification dispersion of the monomers and water using the surfactant, next, charging water and the surfactant into a reaction can, raising the temperature, then, adding the monomer emulsion fabricated in advance dropwise thereto, and appropriately adding the radical polymerization initiator to cause emulsion polymerization. However, the method is not limited thereto.

The solid content concentration of the (meth)acrylic polymer emulsion (B) is normally 20 to 65 mass% and preferably 40 to 60 mass%. Within this range, the viscosity is appropriate, and the (meth)acrylic polymer emulsion (B) is easy to mix. In addition, the average particle diameter of the (meth)acrylic polymer emulsion in (meth)acrylic polymer emulsion (B) is preferably 50 to 500 nm and more preferably 100 to 300 nm. When the average particle diameter is within this range, the dispersibility of (meth)acrylic polymer emulsion particles is high, and an emulsion having an appropriate viscosity for handling can be obtained.

The solid content of the (meth)acrylic polymer emulsion may include not only the (meth)acrylic polymer but also the surfactant or the like used during the production. The content ratio between the chloroprene polymer latex (A) and the (meth)acrylic polymer emulsion (B) is 90:10 to 65:35, preferably 80:20 to 65:35, and more preferably 75:25 to 70:30 in terms of the mass ratio (a:b) between the solid content (a) including the chloroprene polymer in the chloroprene polymer latex (A) and the solid content (b) including the polymer in the (meth)acrylic polymer emulsion (B). The masses of the solid contents of the chloroprene polymer latex (A) and the (meth)acrylic polymer emulsion (B) are obtained by multiplying the mass of each of the chloroprene polymer latex (A) and the (meth)acrylic polymer emulsion (B) by the solid content concentration of each. The solid content concentration is measured by a method to be described in examples.

### Chlorinated Polyolefin Resin (C)

The chlorinated polyolefin resin (C) refers to a resin obtained by chlorinating a polyolefin. The chlorinated polyolefin resin (C) is a component for imparting adhesiveness to polyolefin resins to the adhesive composition.

The content of the chlorinated polyolefin resin (C) is not particularly limited, but is preferably more than 0 parts by mass and 50 parts by mass or less, more preferably 10 parts by mass or more and 45 parts by mass or less, and still more preferably 20 parts by mass or more and 40 parts by mass or less with respect to a total of 100 parts by mass of the solid contents of the chloroprene polymer latex (A) and the (meth)acrylic polymer emulsion (B).

In the present embodiment, with respect to 100 parts by mass in terms of the solid content of the chloroprene polymer latex (A), 11 to 50 parts by mass of the chlorinated polyolefin resin (C) is preferably used, 13 to 40 parts by mass is more preferably used, and 15 to 30 parts by mass is still more preferably used. The addition of the chlorinated polyolefin resin makes it possible to enhance the favorable adhesiveness to polyolefin resins, and, within the above-described range, high thermal creep resistance can be maintained, and the cost is excellent. In a case where the chlorinated polyolefin resin is used in an emulsion or a solution as described below, the above-described amount becomes the amount of a solid content obtained by removing a component that volatilizes under solid content measurement conditions, such as a solvent or a volatile component, and, in a case where the surfactant is contained, the amount including the surfactant as well becomes the solid content.

As a raw material of the chlorinated polyolefin resin (C), a well-known material that can be a raw material of a chlorinated polyolefin resin can be freely selected and used as long as the effect of the present invention is not impaired. Examples thereof include crystallized polypropylene, amorphous polypropylene, polybutene-1, low-density or high-density polyethylene, ethylene/propylene copolymers, ethylene/propylene/diene copolymers, and the like.

The chlorinated polyolefin resin (C) is preferably an acid-modified chlorinated polyolefin resin obtained by graft-polymerizing at least one monomer selected from α,β-unsaturated carboxylic acid and anhydrides thereof. Here, examples of the α,β-unsaturated carboxylic acid and the anhydrides thereof include maleic acid, itaconic acid, citraconic acid, fumaric acid, mesaconic acid, aconitic acid, maleic anhydride, itaconic anhydride, citraconic anhydride, aconitic anhydride and the like. When the chlorinated polyolefin resin (C) is acid-modified, cross-linking of a polyvalent metal ion and a carboxy group occurs in a case where a metal oxide, such as zinc oxide or magnesium oxide, has been blended into an adhesive, and it is possible to improve adhesion performance, such as thermal creep resistance or solvent resistance.

The chlorine content rate of the chlorinated polyolefin resin (C) is not particularly limited, but is preferably 10 to 40 mass%. When the chlorine content rate is within the above-described range, the compatibility with the chloroprene polymer latex (A) is high, and the adhesiveness to an adherend such as a polyolefin base material is also high.

The usage form of the chlorinated polyolefin resin (C) is not particularly limited as long as the chloroprene polymer latex (A) and the (meth)acrylic polymer emulsion (B) can be mixed together, but is normally an emulsion in which the chlorinated polyolefin resin (C) is dispersed in a dispersion medium. In addition, in the emulsion, a surfactant may be contained as appropriate for emulsification. The surfactant that is used in the emulsion of the chlorinated polyolefin resin (C) is also not particularly limited as long as the effect of the present invention is not impaired, and examples thereof include nonionic surfactants, anionic surfactants, cationic surfactants and amphoteric surfactants. In the present technique, a nonionic surfactant is preferably used from the viewpoint of the storage stability of the adhesive composition.

As commercially available products that can be used as the chlorinated polyolefin resin (C), there are a water-based chlorinated polyolefin SUPERCHLON (registered trademark) E-480T manufactured by Nippon Paper Industries Co., Ltd., a water-based chlorinated polyolefin SUPERCHLON (registered trademark) E-415 manufactured by Nippon Paper Industries Co., Ltd., a water-based chlorinated polyolefin CP347W manufactured by Eastman Chemical Company, and the like.

The solid content concentration of the chlorinated polyolefin resin (C) emulsion is preferably 15 to 60 mass% and more preferably 20 to 45 mass%. When the solid content concentration is within the above-described range, the viscosity is appropriate, and the chlorinated polyolefin resin (C) emulsion is easy to mix. The dispersion medium is normally water. As an additive, a solvent that is compatible with water, such as ethylene glycol or ethanol, may be contained.

### Tackifier (D)

In the present invention, in addition to the components (A) to (C), a tackifier (D) is preferably further contained.

The tackifier (D) is added to improve the adhesiveness of the adhesive composition and the contact adhesiveness of the chloroprene polymer. Particularly, adhesiveness in a case where a polyolefin is used as an adherend can be improved.

With respect to 100 parts by mass of the total amount of the solid contents of the chloroprene polymer latex (A) and the (meth)acrylic polymer emulsion (B), more than 0 parts by mass and less than 50 parts by mass of the tackifier (D) is preferably used, 3 to 40 parts by mass is more preferably used, and 5 to 25 parts by mass is still more preferably used. When the tackifier is contained within the above-described range, it is possible to improve the adhesiveness of the adhesive composition and the contact adhesiveness of the chloroprene polymer and to improve the thermal creep resistance with adherends.

The tackifier (D) is preferably 1 to 50 parts by mass with respect to 100 parts by mass of the total amount of the solid contents of the chloroprene polymer latex (A), the (meth)acrylic polymer emulsion (B), and the chlorinated polyolefin resin (C).

In a case where the tackifier (D) is used in an emulsion or a solution as described below, the amount becomes the amount of a solid content obtained by removing the solvent or the like.

The kind of the tackifier (D) is not particularly limited, examples thereof include rosin-based resins such as gum rosin, tall rosin, wood rosin, disproportionated rosin, polymerized rosin, and hydrogenated products thereof, rosin ester resins, terpene phenol-based resins such as hydrogenated products of a terpene phenolic resin, petroleum-based resins such as aliphatic petroleum resins, alicyclic petroleum resins, aromatic petroleum resins, copolymer-based petroleum resins, and hydrogenated products thereof, alkylphenol-based resins, and the like, and, among these, at least one of a polymerized rosin, a rosin-based resin, a rosin ester resin, a terpene phenolic resin, and an alicyclic petroleum-based resin is preferably contained, and a polymerized rosin is more preferable. The rosin-based resins and the rosin ester reins that are used as the tackifier (D) are different from the alkali metal salt of the rosin acid and may not be an alkali metal salt.

As a method for adding the tackifier (D), an emulsion of the tackifier (D) is generally mixed with the chloroprene polymer latex (A) and the (meth)acrylic polymer emulsion (B) or the like, but the tackifier (D) itself may be added during the production step of the chloroprene polymer latex (A) or the (meth)acrylic polymer emulsion (B). This addition method is effective as one of the methods for adding a tackifier (D) for which no emulsions are commercially available.

As commercially available products of the tackifier (D) that can be used in the present embodiment, there are SUPER ESTER (registered trademark) E-900-NT manufactured by Arakawa Chemical Industries, Ltd., which is a polymerized rosin-based emulsion, HARIESTER SK-218NS, HARIESTER SK-323NS, and HARIESTER SK-508H manufactured by Harima Chemicals Group, Inc., which are rosin-based emulsions, TAMANOL (registered trademark) E-100, TAMANOL (registered trademark) E-200NT, TAMANOL (registered trademark) E-102A manufactured by Arakawa Chemical Industries, Ltd., which are terpene phenolic resin emulsions, TR-602 manufactured by BASF SE, AQUATAC6025 manufactured by Kraton Corporation, and the like. In addition, as a solid-form tackifier (D), there are ARKON (registered trademark) M-135 manufactured by Arakawa Chemical Industries, Ltd., which is an alicyclic petroleum resin, and the like.

### · Metal oxide or hydroxide

In the adhesive composition according to the present embodiment, in addition to the chloroprene polymer latex (A), the (meth)acrylic polymer emulsion (B), the chlorinated polyolefin resin (C), and the tackifier (D), a metal oxide or hydroxide can be used.

The metal oxide or hydroxide is preferably a polyvalent metal oxide or hydroxide and more preferably a metal oxide or hydroxide of a metal other than divalent alkali rare earth metals.

The metal oxide or hydroxide is added to improve the adhesive strength and thermal creep resistance of the adhesive composition. Particularly, when a carboxy group is contained in the adhesive composition, since cross-linking of a polyvalent metal ion and the carboxy group, it is possible to further improve the thermal creep resistance. In addition, the adhesiveness in a case where a soft polyvinyl chloride resin is used as an adherend can be improved.

With respect to 100 parts by mass in terms of the solid content of the chloroprene polymer latex (A), 1 to 10 parts by mass of the metal oxide or hydroxide is preferably used in terms of the solid content, 0.3 to 7 parts by mass is more preferably used in terms of the solid content, and 0.5 to 5 parts by mass is still more preferably used in terms of the solid content. The addition of the metal oxide or hydroxide makes it possible to improve the thermal creep resistance. In addition, the addition of the metal oxide or hydroxide within the above-described range makes it possible to prevent a decrease in the initial adhesive strength and deterioration of the contact adhesiveness and to reduce the cost.

Specific examples of the metal oxide or hydroxide that can be used in the present invention include zinc oxide, magnesium oxide, zinc hydroxide, magnesium hydroxide and the like, and zinc oxide and magnesium oxide are more preferable. It is also possible to jointly use two or more of these metal oxides. Among these, zinc oxide is preferable since ionic cross-linking with a carboxy group that is contained in the (meth)acrylic polymer is easy.

In addition, the metal oxide or hydroxide is preferably added in a form of being dispersed in water to be rapidly mixed with water-based adhesives. As commercially available products that can be used in the present embodiment, there are AZ-SW manufactured by Osaki Industry Co., Ltd. and the like.

In the above method for producing an adhesive composition of the present invention, the chlorinated polyolefin resin (C), the tackifier (D) as necessary or the like are blended into the chloroprene polymer latex (A) and the (meth)acrylic polymer emulsion (B) and mixed so that (A) and (B) are contained in the above-described ratio.

A mixing method is not particularly limited, and a well-known method, such as mixer, can be employed.

To the adhesive composition of the present invention, it is possible to arbitrarily add a filler, a pigment, a colorant, a wetting agent, an anti-foaming agent, a thickener or the like.

The solid content concentration or viscosity of the obtained adhesive composition is adjusted as appropriate depending on the purpose. As an adjusting method, a well-known method, for example, evaporation or addition of moisture, is employed.

An adhesive composition of one embodiment of the present invention contains a chloroprene polymer (A1), a (meth)acrylic polymer (B1) having a constituent unit that is derived from a monomer component represented by formula (1), the chlorinated polyolefin resin (C), and an aqueous medium. The monomer component represented by the formula (1) is as described above.

The mass ratio (A1:B1) between the chloroprene polymer (A1) and the (meth)acrylic polymer (B1) in the adhesive composition is 90:10 to 65:35, preferably 80:20 to 65:35, and more preferably 75:25 to 70:30. The masses of the chloroprene polymer (A1) and the (meth)acrylic polymer (B1) also include the rosin acid metal salt, the surfactant, and the like used during the production as described above.

The content rate of a gel component in the chloroprene polymer (A1) is within a range of 15 to 95 mass%, preferably 20 to 80 mass%, and more preferably 30 to 70 mass% as described above. Tg of the (meth)acrylic polymer (B1) is also, as described above, -30°C or higher and 20°C or lower, preferably -30°C or higher and 20°C or lower, preferably - 20°C or higher and 20°C or lower, more preferably -15°C or higher and 10°C or lower, and still more preferably -11°C or higher and 5°C or lower.

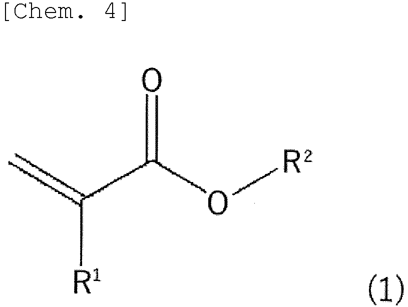

In the general formula (1), R¹ is a hydrogen atom or a methyl group, and R² represents a linear or branched alkyl group having 1 to 18 carbon atoms. The details are as described above.

With respect to a total of 100 parts by mass of the chloroprene polymer (A1) and the (meth)acrylic polymer (B1), it is desirable that the chlorinated polyolefin resin (C) is preferably more than 0 parts by mass and 50 parts by mass or less, more preferably 10 parts by mass or more and 45 parts by mass or less, and is contained in an amount of still more preferably 20 parts by mass or more and 40 parts by mass or less.

In addition, when the solid content of the adhesive composition is set to 100 mass%, it is desirable that the total amount of the solid contents of the chloroprene polymer (A1) and the (meth)acrylic polymer (B1) is preferably 20 to 98 mass%, more preferably 50 to 90 mass%, and still more preferably 60 to 75 mass%.

Furthermore, the adhesive composition of the present invention may further contain the tackifier (D), and the amount of the tackifier (D) blended is preferably more than 0 parts by mass and less than 50 parts by mass, more preferably 3 to 40 parts by mass, and still more preferably 5 to 25 parts by mass with respect to 100 parts by mass of the total amount of the chloroprene polymer (A1) and the (meth)acrylic polymer emulsion (B1). The tackifier (D) preferably contains at least one of a rosin-based resin, a terpene phenolic resin, and an alicyclic petroleum resin.

The details thereof are as described in the production method.

When the solid content of the adhesive composition of the present invention is set to 100 mass%, it is desirable that the total amount of the chloroprene polymer (A1) and the (meth)acrylic polymer (B1) is preferably 20 to 98 mass%, more preferably 50 to 90 mass%, and still more preferably 60 to 75 mass%. Within this range, the coating and drying of the composition are easy, well-known methods can be employed, and a uniform adhesive layer can be produced.

In one embodiment of the present invention, an adhesive layer is formed from the adhesive composition.

A method for producing the adhesive layer is not limited, and the adhesive layer can be produced by applying the adhesive composition to the surface of an adherend and then drying the adhesive composition at a drying temperature of 40°C or higher for three minutes or longer. The drying temperature is preferably 60°C or higher and more preferably 80°C or higher.

The adherend is not particularly limited as long as the adhesive composition can be applied thereto, and the adherend can be used for the adhesion of a foam, a sheet, a film, canvas, glass or the like. The adhesive composition is highly adhesive to soft polyvinyl chloride resins that are hardly adhesive and is thus effective in a case where at least one adherend is a soft polyvinyl chloride resin.

An application method is also not particularly limited, and a well-known method, such as brush coating, spatula coating, spraying, dipping, or coating, can be employed. The thickness of the adhesive layer is not particularly limited as long as the adhesive force can be held, is normally approximately 20 to 100 um after the adhesive layer is dried and a dispersion medium is volatilized, and is not particularly limited.

In addition, one embodiment of the present invention is a laminate formed by laminating adherends through the adhesive layer.

That is, the laminate according to one embodiment of the present invention is formed by laminating two adherends through the adhesive composition, and at least one of the adherends is a soft polyvinyl chloride resin. Even when both of the adherends are made of the same material, the adherends can be used with no particular limitations. In addition, adhesive layers may be provided to both of the adherends in advance, and the adherends may be laminated together and made to adhere to each other. In order for strong adhesion, the laminate may be pressurized. The laminate may be pressurized as a whole or a pressure may be applied only to parts where the adhesive layer has been provided. A pressurization method is not particularly limited, and the pressure is also not particularly limited unless the pressure is high enough to cause significant deformation of the adhesive layer.

A method for producing such a laminate is also not particularly limited, and an adhesive layer made of the above-described adhesive composition may be provided to at least one of at least two adherends, and the adherends may be then laminated through an adhesive layer.

### Examples

Hereinafter, the present invention will be described with reference to examples and comparative examples, but the present invention is not limited to the following examples by any means.

Physical properties shown in the examples and the comparative examples were measured under the following conditions and by the following measurement methods.

### [Measurement Methods]

### 1) Solid Content Concentration

The solid content concentrations of the chloroprene polymer latex (A), the (meth)acrylic polymer emulsion (B), and an emulsion of the chlorinated polyolefin resin (C) are calculated from the mass before drying and the mass after drying after 1 g of the chloroprene polymer latex (A), the (meth)acrylic polymer emulsion (B), or the emulsion of the chlorinated polyolefin resin (C) was dried by being thermally treated on an aluminum dish having a diameter of 39 mm (at 141°C for 30 minutes) in the atmosphere to leave the solid content alone. Solid content concentration (mass%) = [(mass after drying at 141̊°C for 30 minutes) / (mass of latex or emulsion before drying) ] × 100

### 2) Polymerization Conversion Rate of Chloroprene Polymer

Approximately 1 g of the chloroprene polymer latex (A) was precisely weighed on an aluminum dish, heated and dried in an oven at 141°C for 25 minutes, and then left to be cooled to room temperature in a desiccator, the mass was measured, and the proportion of a non-volatile component was calculated. The polymerization conversion rate was calculated with an assumption that the theoretical proportion of a non-volatile component of a reaction liquid in a case where all monomers, such as chloroprene and 2,3-dichloro-1,3-butadiene, were polymerized to turn into the non-volatile component is a polymerization conversion rate of 100%.

The polymerization conversion rate was obtained by the following formula. Polymerization conversion rate [%] = [(amount of polymer generated/amount of chloroprene monomer prepared) ] × 100

Here, the amount of the polymer generated was obtained by subtracting a solid content other than the polymer from a solid content after polymerization. For the solid content other than the polymer, the component that did not volatilize under the condition of 141°C was calculated from the amount of a polymerization raw material prepared.

### 3) Content Rate of Gel Component

1 g (moisture amount: 35 to 65 mass%) of the chloroprene polymer latex (A) is added dropwise to 100 ml of tetrahydrofuran (hereinafter, also referred to as "THF") and shaken for 12 hours, then, a dissolved phase of the supernatant is separated with a centrifuge, THF is evaporated and dried at 100°C for one hour, and the mass of a dried product is measured. Since the mass of this dried product is the mass of a tetrahydrofuran-soluble component in a chloroprene polymer, the mass of the tetrahydrofuran-soluble component is subtracted from the mass of the chloroprene polymer, the value is regarded as the mass of a gel, and the content rate of a gel component in the chloroprene copolymer is calculated. Since the mass of the chloroprene polymer is almost the same as the mass of the solid content of the chloroprene polymer latex (A), the value can be used. Content rate (%) of gel component = ( (mass (g) of chloroprene polymer) - (mass (g) of dried product) ) + (mass of chloroprene polymer) × 100

### 4) Copolymerization Fraction of 2,3-Dichloro-1,3-Butadiene of Chloroprene

Polymer A residual chloroprene monomer and a 2,3-dichloro-1,3-butadiene monomer in the chloroprene polymer latex (A) were analyzed by high-performance liquid chromatography (hereinafter, also referred to as "HPLC"), the amount of each monomer was subtracted from the amount of each monomer prepared to calculate the copolymer composition in the chloroprene polymer.

Regarding the measurement conditions of HPLC, Prominence series manufactured by Shimadzu Corporation was used as an HPLC measuring instrument, SPD-M20A (photodiode array detector) was used as a detector, the kind of a column was Shodex (registered trademark) ODP-50 4D manufactured by Showa Denko K.K., the column temperature was 40°C, the outflow rate was 0.8 ml/minute, and tetrahydrofuran was used as an eluent.

### 5) Adhesive Force

A 180° peel test was performed on a test piece for an adhesive powder test, which will be described below, by a method in accordance with JIS K 6854-2-1999. As the adhesive force, a normal adhesive force (kN/m) was measured. The adhesive force is a value measured after the test piece is pasted and then cured for three days at 23°C and 60%RH (relative humidity) and the peel test is then performed.

### 6) Thermal Creep Resistance

After a test piece for an adhesive force test, which will be described below, was cured under a 23°C atmosphere for one day, a load of 100 g/25 mm was applied in a 180° direction under an 80°C atmosphere, and the peel length after 24 hours was measured and regarded as the thermal creep resistance.

### 7) Glass Transition Temperature

The glass transition temperature was measured by differential scanning calorimetry (DSC). Ten milligrams of a sample was heated from -60°C up to 180°C at 10°C/minute, and the glass transition temperature was measured.

### 8) Average Particle Diameter

Regarding the average particle diameter, the z average particle diameter of a solution obtained by diluting the latex or the emulsion with pure water to 0.01 to 0.1 mass% or less was measured with a dynamic light scattering photometer (ZETASIZER (registered trademark) Nano-S manufactured by Malvern Panalytical Ltd.).

### [Preparation of Adhesive Composition]

An adhesive composition was fabricated by adding (blending) a (meth)acrylic polymer emulsion (B), a chlorinated polyolefin resin (C), a tackifier (D), and other additives to a chloroprene polymer latex (A) obtained in each preparation example in amounts shown in Table 1 and Table 2.

### [Fabrication of Each Test Piece]

### 1) Test Piece for Adhesive Force Test

150 g (solid content)/m² of each of the adhesive compositions (Examples 1 to 10 and Comparative Examples 1 to 5) was applied to a soft polyvinyl chloride plate (25 mm × 200 mm × 2 mm in thickness, applied surface: 25 mm × 100 mm) with a brush, 150 g (solid content)/m² of each of the same adhesive compositions was applied to a polypropylene natural color plate (25 mm × 200 mm × 1 mm in thickness, applied surface: 25 mm × 100 mm) with the brush, and the adhesive compositions were dried at 80°C for five minutes. After that, the adhesive compositions were left to stand at room temperature for five minutes, the applied surfaces were pasted together and pressed with a hand press at a pressure of 0.5 MPa for three minutes, and this was used as the test piece for an adhesive (peel) test.

### Preparation Example 1

### [Production of Chloroprene Polymer Latex (A)-1]

1830 g of chloroprene, 170 g of 2,3-dichloro-1,3-butadiene, 86 g of disproportionated rosin, 1715 g of pure water, 22.8 g of potassium hydroxide, 5.2 g of sodium hydroxide, 1.2 g of n-dodecyl mercaptan (molecular weight modifier), and 10.4 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

2 g of sodium sulfite was added to this emulsified product, next, 0.8 g of potassium persulfate was added thereto as a polymerization initiator, and polymerization was performed at 40°C under a nitrogen atmosphere. Once a desired polymerization rate was reached, 0.5 g of phenothiazine was added thereto immediately to stop the polymerization. The solid content concentration of the obtained reaction product was 48 mass%, and the polymerization conversion rate of a chloroprene polymer was 88%. Subsequently, unreacted chloroprene was removed by steam stripping, and a chloroprene polymer latex (A)-1 was obtained. The gel content rate of the chloroprene polymer in the chloroprene polymer latex (A)-1 was 42 mass%, the solid content concentration of the chloroprene polymer latex (A)-1 was 50 mass%, and the average particle diameter was 130 nm.

### Preparation Example 2

### [Production of Chloroprene Polymer Latex (A)-2]

1830 g of chloroprene, 170 g of 2,3-dichloro-1,3-butadiene, 86 g of disproportionated rosin, 1715 g of pure water, 22.8 g of potassium hydroxide, 5.2 g of sodium hydroxide, and 10.4 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

2 g of sodium sulfite was added to this emulsified product, next, 0.8 g of potassium persulfate was added thereto as a polymerization initiator, and polymerization was performed at 40°C under a nitrogen atmosphere. Once a desired polymerization rate was reached, 0.5 g of phenothiazine was added thereto immediately to stop the polymerization. The solid content concentration of the obtained reaction product was 48 mass%, and the polymerization conversion rate of a chloroprene polymer was 88%. Subsequently, unreacted chloroprene was removed by steam stripping, and a chloroprene polymer latex (A)-2 was obtained. The gel content rate of the chloroprene polymer in the chloroprene polymer latex (A)-2 was 88 mass%, the solid content concentration of the chloroprene polymer latex (A)-2 was 50 mass%, and the average particle diameter was 130 nm.

### Preparation Example 3

### [Production of Chloroprene Polymer Latex (A)-3]

2000 g of a chloroprene monomer, 34.2 g of disproportionated rosin (manufactured by Arakawa Chemical Industries, Ltd., R-300), 1211 g of pure water, 21.3 g of potassium hydroxide, 3.6 g of n-dodecyl mercaptan (molecular weight modifier), and 24 g of a formaldehyde-naphthalenesulfonic condensate sodium salt liquid (trade name: SN-PW-43 (manufactured by SAN NOPCO LIMITED)) were charged into a reactor having an internal volume of 5 L and emulsified.

2 g of sodium sulfite was added to this emulsified product, next, 0.8 g of potassium persulfate was added thereto as a polymerization initiator, and polymerization was performed at 40°C under a nitrogen gas atmosphere. Once a desired polymerization rate was reached, 0.5 g of phenothiazine was added thereto immediately to stop the polymerization. The solid content concentration of the obtained reaction product was 55 mass%, and the polymerization conversion rate of a chloroprene polymer was 90%. Subsequently, unreacted chloroprene was removed by steam stripping, and a chloroprene polymer latex (A)-3 was obtained. The gel content rate of the chloroprene polymer in the chloroprene polymer latex (A)-3 was 13 mass%, the solid content concentration of the chloroprene polymer latex (A)-3 was 58 mass%, and the average particle diameter was 200 nm.

### Preparation Example 4

### [Production of (Meth)acrylic Polymer Emulsion (B)-1]

66 g of ethyl acrylate, 21 g of methyl methacrylate, 6.6 g of butyl acrylate, 1.9 g of methacrylic acid, 1.8 g of a reactive surfactant (trade name: ADEKA REASOAP (registered trademark) SR-10, manufactured by ADEKA CORPORATION), and 45 g of ion exchange water were uniformly emulsified in a container using a homogenizer, and a monomer emulsified product was produced.

31 g of ion exchange water and 0.09 g of a reactive surfactant (trade name: ADEKA REASOAP (registered trademark) SR-10, manufactured by ADEKA CORPORATION) were put into a separable flask and heated up to 80°C under stirring. 0.09 g of potassium persulfate and 5 mass% of the monomer emulsified product were added to the separable flask, and the dropwise addition of the remaining monomer emulsified product was then begun, thereby initiating a reaction. The remaining monomer emulsified product was added to the separable flask for four hours, and an aqueous solution obtained by dissolving 0.19 g of potassium persulfate in 8.9 g of ion exchange water was also added thereto for 4.5 hours at the same time as the beginning of the dropwise addition of the remaining monomer emulsified product. After the end of the addition of the potassium persulfate aqueous solution, the components were stirred at 80°C for one hour, and the reaction was ended. The inside of the separable flask was cooled, a 2.4 mass% caustic soda aqueous solution was added thereto to adjust the pH to 6.5, and the reaction product was filtered with a wire mesh having 180 meshes (opening: 0.091 mm) to obtain a (meth)acrylic polymer emulsion (B)-2. The solid content of a (meth)acrylic polymer emulsion (B)-1 was 50 mass%, and the glass transition temperature (Tg) was -11°C.

### Preparation Example 5

### [Production of (Meth)acrylic Polymer Emulsion (B)-2]

86 g of 2-ethylhexyl acrylate, 9.5 g of methyl methacrylate, 2.0 g of 2-hydroxyethyl acrylate, 2.4 g of acrylic acid, 0.077 g of γ-methacryloxypropyltrimethoxysilane, 1.3 g of a reactive surfactant (trade name: ADEKA REASOAP (registered trademark) SR-10, manufactured by ADEKA CORPORATION), and 65 g of ion exchange water were uniformly emulsified in a container using a homogenizer, and a monomer emulsified product was produced.

27 g of ion exchange water, 0.23 g of a reactive surfactant (trade name: ADEKA REASOAP (registered trademark) SR-10, manufactured by ADEKA CORPORATION), and 0.20 g of 2-ethylhexylthioglycolate were put into a separable flask and heated up to 80°C under stirring. 0.06 g of potassium persulfate and 5 mass% of the monomer emulsified product were added to the separable flask, and the dropwise addition of the remaining monomer emulsified product was then begun, thereby initiating a reaction. The remaining monomer emulsified product was added to the separable flask for four hours, and an aqueous solution obtained by dissolving 0.21 g of potassium persulfate in 8.4 g of ion exchange water was also added thereto for 4.5 hours at the same time as the beginning of the dropwise addition of the remaining monomer emulsified product. After the end of the addition of the potassium persulfate aqueous solution, the components were stirred at 80°C for one hour, and the reaction was ended. The inside of the separable flask was cooled, 25 mass% ammonia water was added thereto to adjust the pH to 8.5, and the reaction product was filtered with a wire mesh having 180 meshes to obtain a (meth)acrylic polymer emulsion (B)-1). The solid content of a (meth)acrylic polymer emulsion (B)-1) was 50 mass%, and the glass transition temperature (Tg) was - 47°C.

### Example 1

70 Parts by mass of the chloroprene polymer latex (A)-1 in terms of the solid content as the chloroprene polymer latex (A), 30 parts by mass of the (meth)acrylic polymer emulsion (B)-1 in terms of the solid content as the (meth)acrylic polymer emulsion (B), 20 parts by mass of SUPERCHLON (registered trademark) E-480T (manufactured by Nippon Paper Industries Co., Ltd.) in terms of the solid content (solid content concentration: 30 mass%) as the emulsion of chlorinated polyolefin resin (C), 20 parts by mass of SUPER ESTER E-900-NT (manufactured by Arakawa Chemical Industries, Ltd.) in terms of the solid content (solid content concentration: 51 mass%) as the tackifier (D), 0.25 parts by mass of AZ-SW (manufactured by Osaki Industry Co., Ltd.) in terms of the solid content (solid content concentration: 50 mass%) as zinc oxide, and 0.8 parts by mass of a 10 mass% diluted solution of SN-THICKENER 612 (manufactured by SAN NOPCO LIMITED) (solid content concentration: 40 mass%) as a thickener were added and uniformly stirred to obtain an adhesive composition.

### Examples 2 to 10 and Comparative Examples 1 to 5

In Example 1, the adhesive composition was fabricated by changing the kind and amount of the chloroprene polymer latex (A), the kind and amount of the (meth)acrylic polymer emulsion (B), the amount of the emulsion of the chlorinated polyolefin resin (C), the kind and amount of the tackifier (D), and the amount of zinc oxide, thereby obtaining adhesive compositions shown in Table 1 and Table 2. The evaluation of the adhesive strengths and the results of the thermal creep resistance tests are shown in Table 1 and Table 2.

TAMANOL E-100 refers to TAMANOL E-100 manufactured by Arakawa Chemical Industries, Ltd., and AQUATAC6025 refers to AQUATAC6025 manufactured by Arizona Chemical, a Kraton Company.

The examples are shown in Table 1, and the comparative examples are shown in Table 2.

**[Table 1]**

| (Parts by mass of solid content. Thickener is parts by mass of diluted solution) | | | | | | |
|---|---|---|---|---|---|---|
| | | Example 1 | Example 2 | Example 3 | Example 4 | Example 5 |
| Chloroprene-based polymer latex (A)-1 | | 70 | 70 | 70 | 70 | 70 |
| Chloroprene-based polymer latex (A)-2 | | | | | | |
| (Meth)acrylic polymer emulsion (B)-1 | | 30 | 30 | 30 | 30 | 30 |
| (a:b) | | 70:30 | 70:30 | 70:30 | 70:30 | 70:30 |
| Chlorinated polyolefin resin (C) | SUPERCHLON E-480T | 20 | 30 | 20 | 20 | 20 |
| Tackifier (D) | SUPER ESTER E-900-NT | 20 | 20 | | | |
| | TAMANOL E-100 | | | 20 | | 20 |
| | AQUATAC6025 | | | | 30 | |
| Zinc oxide | AZ-SW | 0.25 | 0.25 | 0.25 | 0.25 | 0.50 |
| Thickener | 10 mass% diluted solution of SN-THICKENER 612 | 0.8 | 0.8 | 0.8 | 0.8 | 1.0 |
| •Evaluation | | | | | | |
| Adhesive strength | (kN/m) | 0.65 | 0.91 | 0.67 | 0.67 | 0.63 |
| 80°C thermal creep test | | 3 mm | 6 mm | 2 mm | 2 mm | 8 mm |

| | | | | | | |
|---|---|---|---|---|---|---|
| (a:b) mass ratio between solid content (a) of chloroprene polymer in chloroprene polymer latex (A) and solid content (b) of polymer in (meth)acrylic polymer emulsion (B) | | | | | | |

**Table 1 (continued)**

| (Parts by mass of solid content. Thickener is parts by mass of diluted solution) | | | | | | |
|---|---|---|---|---|---|---|
| | | Example 6 | Example 7 | Example 8 | Example 9 | Example 10 |
| Chloroprene-based polymer latex (A)-1 | | 90 | 75 | 65 | | 70 |
| Chloroprene-based polymer latex (A)-2 | | | | | 70 | |
| (Meth)acrylic polymer emulsion (B)-1 | | 10 | 25 | 35 | 30 | 30 |
| (a:b) | | 90:10 | 75:25 | 65:35 | 70:30 | 70:30 |
| Chlorinated polyolefin resin (C) | SUPERCHLON E-480T | 20 | 20 | 20 | 20 | 10 |
| Tackifier (D) | SUPER ESTER E-900-NT | 20 | | | 20 | 20 |
| | TAMANOL E-100 | | 20 | 20 | | |
| | AQUATAC6025 | | | | | |
| Zinc oxide | AZ-SW | 0.25 | 0.25 | 0.25 | 0.25 | 0.25 |
| Thickener | 10 mass% diluted solution of SN-THICKENER 612 | 0.8 | 0.8 | 0.8 | 0.8 | 0.8 |
| •Evaluation | | | | | | |
| Adhesive strength | (kN/m) | 0.91 | 0.55 | 0.54 | 0.65 | 0.40 |
| 80°C thermal creep test | | 10 mm | 9 mm | 4 mm | 2 mm | 10 mm |

| | | | | | | |
|---|---|---|---|---|---|---|
| (a:b) mass ratio between solid content (a) of chloroprene polymer in chloroprene polymer latex (A) and solid content (b) of polymer in (meth)acrylic polymer emulsion (B) | | | | | | |

**[Table 2]**

| (Parts by mass of solid content. Thickener is parts by mass of diluted solution) | | | | | | |
|---|---|---|---|---|---|---|
| | | Comparative Example 1 | Comparative Example 2 | Comparative Example 3 | Comparative Example 4 | Comparative Example 5 |
| Chloroprene-based polymer latex (A)-1 | | 100 | 60 | 50 | | 70 |
| Chloroprene-based polymer latex (A)-3 | | | | | 70 | |
| (Meth)acrylic polymer emulsion (B)-1 | | | 40 | 50 | 30 | |
| (Meth)acrylic polymer emulsion (B)-2 | | | | | | 30 |
| (a:b) | | - | 60:40 | 50:50 | 70:30 | 70:30 |
| Chlorinated polyolefin resin (C) | SUPERCHLON E-480T | 20 | 20 | 20 | 20 | 20 |
| Tackifier (D) | SUPER ESTER E-900-NT | 20 | 20 | 20 | 20 | |
| | TAMANOL E-100 | | | | | 20 |
| Zinc oxide | AZ-SW | 0.50 | 0.25 | 0.25 | 0.25 | 0.5 |
| Thickener | 10 mass% diluted solution of SN-THICKENER 612 | 1.0 | 0.8 | 0.8 | 0.8 | 1.0 |
| •Evaluation | | | | | | |
| Adhesive strength | (kN/m) | 0.65 | 0.65 | 0.44 | 0.81 | 0.98 |
| 80°C thermal creep test | | >70 mm | >70 mm | >70 mm | >70 mm | >70 mm |

| | | | | | | |
|---|---|---|---|---|---|---|
| (a:b) mass ratio between solid content (a) of chloroprene polymer in chloroprene polymer latex (A) and solid content (b) of polymer in (meth)acrylic polymer emulsion (B) | | | | | | |

As is clear from Examples 1 to 10 in Table 1, for the adhesive compositions containing the chloroprene polymer latex (A), the (meth)acrylic polymer emulsion (B), and the chlorinated polyolefin resin (C), in which the solid content ratio between the contents of the chloroprene polymer latex (A) and the (meth)acrylic polymer emulsion (B) was 90:10 to 65:35, the content rate of the gel component in the chloroprene polymer in the chloroprene polymer latex (A) was 15% to 95%, and Tg of the (meth)acrylic polymer emulsion (B) was -30°C or higher and 20°C or lower, the adhesive force to soft polyvinyl chloride resins were all as strong as 0.40 to 0.91 kN/m, and the peel distances during the thermal creep resistance test were also 10 mm or less, which indicates favorable heat resistance. In contrast, in Comparative Examples 2 and 3 where the solid content ratio between the contents of the chloroprene polymer latex (A) and the (meth)acrylic polymer emulsion (B) was outside the range of 90:10 to 65:35 and Comparative Example 1 where the (meth)acrylic polymer emulsion (B) was not contained, the thermal creep resistance was not sufficient.

Furthermore, in Examples 1 to 9, 20 parts by mass or more of the chlorinated polyolefin resin (C) was contained with respect to a total of 100 parts by mass of the chloroprene polymer latex (A) and the (meth)acrylic polymer emulsion (B), whereby results of not only the thermal creep resistance with polyolefins but also the adhesive strength being excellent were obtained.

As is clear from Examples 1, 3, and 4, the tackifier (D) exhibited favorable adhesive strength to soft polyvinyl chloride resins and heat resistance even when the kind or the amount added was changed.

As is clear from Example 5, regardless of the amounts of zinc oxide and the thickener added, favorable adhesive strength to soft polyvinyl chloride resins and heat resistance are exhibited.

As is clear from Comparative Example 4, when (A)-3 where the content of the gel component in the chloroprene polymer latex (A) was less than 15% is used, the thermal creep resistance with respect to soft polyvinyl chloride resins is not sufficient.

As is clear from Comparative Example 5, when the (meth)acrylic polymer emulsion (B)-2 where Tg was lower than -20°C is used, the thermal creep resistance with respect to soft polyvinyl chloride resins is not sufficient.

## Claims

1. A method for producing an adhesive composition, comprising mixing
a chloroprene polymer latex (A) containing a chloroprene polymer in which a content rate of a gel component is 15% to 95%,
a (meth)acrylic polymer emulsion (B) containing a (meth)acrylic polymer having a monomer component represented by formula (1) in which Tg of the (meth)acrylic polymer is - 30°C or higher and 20°C or lower, and
a chlorinated polyolefin resin (C)
such that a mass ratio (a:b) between a solid content (a) of the chloroprene polymer in the chloroprene polymer latex (A) and a solid content (b) of the polymer in the (meth)acrylic polymer emulsion (B) reaches 90:10 to 65:35, 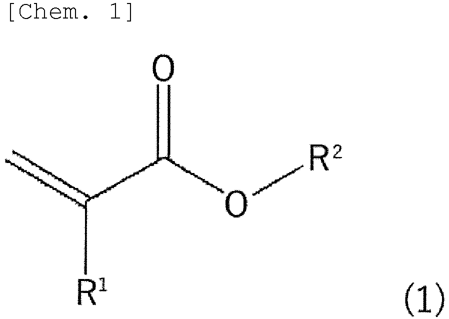 wherein R¹ is a hydrogen atom or a methyl group, and R² represents a linear or branched alkyl group having 1 to 18 carbon atoms.

2. The method for producing an adhesive composition according to claim 1, wherein the chlorinated polyolefin resin (C) is more than 0 parts by mass and 50 parts by mass or less with respect to a total of 100 parts by mass of the solid contents of the chloroprene polymer latex (A) and the (meth)acrylic polymer emulsion (B).

3. The method for producing an adhesive composition according to claim 1, wherein, when a solid content of the adhesive composition is set to 100 mass%, a total amount of the solid contents of the chloroprene polymer latex (A) and the (meth)acrylic polymer emulsion (B) is 20 to 98 mass%.

4. The method for producing an adhesive composition according to claim 1, wherein a tackifier (D) is further blended.

5. The method for producing an adhesive composition according to claim 4, wherein an amount of the tackifier (D) blended is more than 0 parts by mass and less than 50 parts by mass with respect to 100 parts by mass of a total amount of the solid contents of the chloroprene polymer latex (A) and the (meth)acrylic polymer emulsion (B).

6. The method for producing an adhesive composition according to claim 4, wherein the tackifier (D) contains at least one of a rosin-based resin, a terpene phenolic resin, and an alicyclic petroleum resin.

7. The method for producing an adhesive composition according to claim 1, wherein the chloroprene polymer in the chloroprene polymer latex (A) is a chloroprene homopolymer or a copolymer of chloroprene and 2,3-dichloro-1,3-butadiene.

8. An adhesive composition comprising: a chloroprene polymer (A1); a (meth)acrylic polymer (B1) having a constituent unit derived from a monomer component represented by formula (1); a chlorinated polyolefin resin (C); and an aqueous medium,
wherein a mass ratio (A1:B1) between the chloroprene polymer (A1) and the (meth)acrylic polymer (B1) in the adhesive composition is 90:10 to 65:35,
a content rate of a gel component in the chloroprene polymer (A1) is 15% to 95%, and Tg of the (meth)acrylic polymer (B1) is -30°C or higher and 20°C or lower, 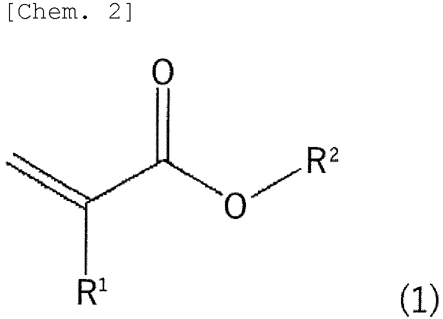
wherein R¹ is a hydrogen atom or a methyl group, and R² represents a linear or branched alkyl group having 1 to 18 carbon atoms.

9. The adhesive composition according to claim 8, wherein the chlorinated polyolefin resin (C) is more than 0 parts by mass and 50 parts by mass or less with respect to a total of 100 parts by mass of the chloroprene polymer (A1) and the (meth)acrylic polymer (B1).

10. The adhesive composition according to claim 8, wherein, when a solid content of the adhesive composition is set to 100 mass%, a total amount of the solid contents of the chloroprene polymer (A1) and the (meth)acrylic polymer (B1) is 20 to 98 mass%.

11. The adhesive composition according to claim 8, further comprising a tackifier (D).

12. The adhesive composition according to claim 11, wherein an amount of the tackifier (D) blended is more than 0 parts by mass and less than 50 parts by mass with respect to 100 parts by mass of a total amount of the chloroprene polymer (A1) and the (meth)acrylic polymer (B1).

13. The adhesive composition according to claim 11, wherein the tackifier (D) contains at least one of a rosin-based resin, a terpene phenolic resin, and an alicyclic petroleum resin.

14. An adhesive layer comprising the adhesive composition according to any one of claims 8 to 13.

15. A laminate formed by laminating two adherends through the adhesive composition according to any one of claims 8 to 13, wherein at least one of the adherends is a soft polyvinyl chloride resin.
